# EUROPEAN PATENT APPLICATION

(11) **EP 4 755 861 A1**
(43) Date of publication of application: **10.06.2026**
(21) Application number: 24218259.0
(22) Date of filing: 09.12.2024
(51) Int. Cl.: C04B 7/12, C04B 28/02

(54) **METHOD OF PRODUCING A POZZOLANIC MATERIAL**

(71) Applicant: Holcim Technology Ltd., 6300 Zug (CH)
(72) Inventor: MOHABEER, Chetna, 38291 Saint Quentin Fallavier (FR); BARBARULO, Rémi, 38291 Saint Quentin Fallavier (FR); HUET, Bruno, 38291 Saint Quentin Fallavier (FR)
(74) Representative: SONN Patentanwälte GmbH & Co KG

(57) **Abstract**

Method of producing a pozzolanic material, the method comprising:
- providing a silico-aluminous mineral material susceptible of pozzolanic reactivity upon calcination,
- subjecting the silico-aluminous mineral material to a thermal treatment step at a temperature of 500-900°C, in order to obtain said pozzolanic material,
- subjecting biomass to a pyrolysis step to obtain a solid pyrolysis product and a gaseous pyrolysis product,
- using at least a partial amount of the gaseous pyrolysis product as a fuel for producing thermal energy and using the same as energy input for said thermal treatment step and for said pyrolysis step.

## Description

The invention refers to a method of producing a pozzolanic material.

Various types of mineral components may be added to Portland cement in order to obtain composite cements. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. During the production of Portland cement clinker a considerable amount of CO₂ per ton of Portland cement clinker is emitted by the decarbonation of the raw materials and from the oxidation of the fuels that occur during calcination of the raw materials in rotary kilns.

Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

Increasing efforts are undertaken to use widely available sources for producing supplementary cementitious materials, such as calcined clays. Various types of raw clay can be treated thermally by heating to a temperature high enough to alter the structure of the clay minerals by dehydroxylation, but low enough to avoid recrystallization and the formation of chemically inert phases. A particularly useful type of clay is kaolinite that has a layered silicate structure, composed of alternating layers of tetrahedral sheets of silica and octahedral sheets of alumina linked with each other by oxygen atoms. When kaolinite is heated during a calcination process, dehydroxylation and transformation of the kaolinite into an amorphous material known as metakaolin are occurring.

However, the calcination step often requires significant thermal energy and consequently results in the emission of carbon dioxide, when fossil fuels are used for generating the required heat. The carbon dioxide emissions associated with the calcination process contribute to the overall carbon footprint of the cement industry, which counteracts the efforts to reduce the carbon footprint through the use of supplementary cementitious materials.

Therefore, it is an object of the invention to address the aforementioned problem by providing a novel method for producing pozzolanic materials with a reduced carbon footprint.

In order to solve this object, the invention provides a method of producing a pozzolanic material, the method comprising:
- providing a silico-aluminous mineral material susceptible of pozzolanic reactivity upon calcination,
- subjecting the silico-aluminous mineral material to a thermal treatment step at a temperature of 500-900°C, in order to obtain said pozzolanic material,
- subjecting biomass to a pyrolysis step to obtain a solid pyrolysis product and a gaseous pyrolysis product,
- using at least a partial amount of the gaseous pyrolysis product as a fuel for producing thermal energy and using the same as energy input for said thermal treatment step and for said pyrolysis step.

By subjecting biomass to a pyrolysis step, the invention obtains a solid pyrolysis product and a gaseous pyrolysis product. The gaseous pyrolysis product is then at least partially used as a fuel for producing thermal energy, which is utilized as an energy input for both the thermal treatment step and the pyrolysis step itself.

In the context of the present invention, the term "biomass" refers to organic matter derived from living or recently living organisms, which can be used as a renewable feedstock for the production of biochar. This biomass can originate from a wide range of sources, including but not limited to: agricultural waste such as crop residues, straw, and husks; forestry waste such as wood chips, sawdust, and bark; energy crops specifically grown for their high biomass yield; and organic waste streams from industries such as food processing, pulp and paper, and municipal solid waste. The biomass utilized in this invention undergoes pyrolysis, a thermochemical conversion process, to produce gaseous and solid pyrolysis products.

By employing a renewable and carbon-neutral fuel source derived from biomass, the invention reduces the reliance on fossil fuels, such as coal or natural gas, which are commonly used in the calcination process. Consequently, the carbon dioxide emissions associated with the production of the pozzolanic material are substantially reduced, as the gaseous pyrolysis product acts as a substitute for the carbon-intensive fossil fuels.

Furthermore, the invention's approach of utilizing the gaseous pyrolysis product as an energy input for the pyrolysis step itself creates a self-sustaining and efficient process. The thermal energy generated from the combustion of the gaseous pyrolysis product is recycled back into the pyrolysis step, reducing the external energy requirements and further minimizing the carbon footprint of the overall process.

The solid pyrolysis product usually comprises biochar which can be used as a mineral component of a composite cement or as an aggregate. In this way, the method of the invention not only produces a pozzolanic material, i.e. the calcined silico-aluminous mineral material, but at the same time an additional useful component in building materials, enabling long-term carbon sequestration. Biochar is a stable form of carbon that can persist in the environment for long times. When integrated into cementitious materials, such as concrete or mortars, biochar effectively locks away the carbon it contains, preventing its release back into the atmosphere. By utilizing biochar in the construction industry, one can create structures that act as long-term carbon sinks. Moreover, additional carbon dioxide, such as carbon dioxide taken form an off-gas, such as the off-gas derived from the combustion of the gaseous pyrolysis product, may be contacted with said biochar, thereby further reducing the carbon footprint and even achieving a negative carbon footprint.

The physical properties of biochar, such as density, porosity, surface area, and microstructure influence its performance in cementitious materials. Biochar particles have irregular shapes with sharp edges that can interlock with other components in cementitious mixtures, potentially enhancing mechanical properties. The highly porous structure of biochar allows it to absorb and retain water within its particles, acting as an internal reservoir. By gradually releasing the absorbed water, biochar particles function as a self-curing agent, promoting continued hydration, reducing shrinkage, and improving the overall performance and durability of mortar and concrete.

Chemically, the biochar composition varies depending on the biomass source and pyrolysis conditions. Some biochars, such as those derived from rice husk, have shown pozzolanic reactivity due to their high silica content, potentially contributing to the formation of cementitious compounds. The alkaline nature of biochar can also affect the pH and hydration of cement.

In terms of thermal properties, biochar has been found to enhance the thermal insulation of cementitious materials due to its low thermal conductivity. This characteristic can be beneficial in improving the energy efficiency of buildings.

The thermal treatment step, e.g. a calcination step, and the pyrolysis step may be conducted in different reactors. However, according to a preferred embodiment of the invention, the pyrolysis step and the thermal treatment step are carried out in the same reactor. In particular, both steps are carried out in a pyrolysis reactor. The pyrolysis reaction occurs in an oxygen-deficient environment, where the amount of oxygen available is less than the stoichiometric requirement for complete combustion of the biomass feedstock.

This limited oxygen supply promotes the thermal decomposition of the biomass into solid (biochar), liquid (bio-oil), and gaseous (syngas) products, rather than complete oxidation into carbon dioxide and water.

If the thermal treatment step is conducted in the pyrolysis reactor, calcination occurs under a reducing atmosphere. In traditional cement production, calcination is carried out in an oxidizing environment, which leads to the oxidation of iron compounds present in the raw materials. This oxidation results in the formation of red-colored iron oxides, such as hematite (Fe₂O₃), which impart a characteristic reddish hue to some calcined products, such as calcined clay. However, by performing the calcination step under a reducing atmosphere within the pyrolysis reactor, the oxidation of iron is prevented. The lack of oxidized iron compounds eliminates the reddish tint, resulting in a product with a more neutral or grayish color. This color difference can be advantageous in certain applications where the aesthetic appearance of the cement or concrete is important.

In order to carry out the thermal treatment step and the pyrolysis step in the same reactor, a preferred embodiment of the invention provides that the silico-aluminous mineral material and the biomass are mixed with each other, preferably prior to being introduced into the reactor, to obtain a mixture and said mixture is subjected to the thermal treatment and the pyrolysis step.

Conducting both pyrolysis and calcination simultaneously and in the same reactor streamlines the overall process, reducing the need for separate equipment and minimizing material handling. This simplification of the system leads to reduced capital costs and a more compact plant layout. Further, the co-location of pyrolysis and calcination steps allows for the efficient utilization of heat energy. In traditional cement production, the calcination step is carried out in a separate rotary kiln or furnace, which requires its own heat source and results in substantial heat losses to the surrounding environment. Similarly, pyrolysis of biomass is typically conducted in dedicated reactors, which also demand an independent supply of thermal energy. However, by combining pyrolysis and calcination in a single reactor, the invention eliminates the need for multiple heating systems and reduces the total energy input required.

Furthermore, conducting pyrolysis and calcination in a single reactor minimizes heat losses to the surrounding environment. In separate installations, heat is lost through the walls, pipes, and other components of each individual unit. However, by consolidating the processes into one reactor, the surface area exposed to the ambient environment is reduced, thereby minimizing heat dissipation.

Preferably, the pyrolysis step and the thermal treatment step are carried out in an inert atmosphere having an oxygen content of < 2 vol.%. This may be achieved by inertizing the pyrolysis reactor at start-up by introducing the moist feedstock into the pyrolysis reactor and slowly heating it up. The steam that is slowly released during this heating up is sufficient to void the reactor of oxygen. Nitrogen gas may be used for purging the seals, but the feedstock does not need to be flushed with N₂ continuously. In this way, the N₂ use is reduced, which reduces operating costs.

According to a preferred embodiment of the invention, the mixture is conveyed through the reactor while being subjected to the calcination and the pyrolysis step. A screw conveyor or any other continuous conveying systems may be used for conveying the mixture from an inlet to an outlet of the reactor. This enables a continuous calcination and pyrolysis process, eliminating the limitations of batch operations. The continuous processing approach increases throughput, productivity, and economic viability. The screw conveyor allows for precise control over residence time, uniform mixing, and effective heat transfer within the reactor.

Preferably, the mixture comprises a weight ratio of the biomass to the silico-aluminous mineral material, each based on the dry weight, of 1:4 to 1:1. Herein, the dry weight refers to the weight of the materials excluding free water. The dry weight is obtained by drying the materials at a temperature of between 60 and 100 °C until all the free water evaporates, i.e. until the weight of the materials does not vary anymore. Selecting a weight ratio in the range of 1:4 to 1:1 ensures that the gaseous pyrolysis products provide sufficient thermal energy for covering the entire energy input required for the calcination step and the pyrolysis step. For example, the pyrolysis of biomass typically requires an energy input of 1.3-1.6 GJ/t dry biomass. Assuming that the pyrolysis of 100 kg of dry biomass produces 75 kg of gaseous pyrolysis products and 25 kg of solid pyrolysis products and assuming that the calorific value of the gaseous pyrolysis products is about 21 GJ/t, one can infer that the gaseous pyrolysis products can generate about 15 GJ/t dry biomass. Taking raw clay as an example for the silico-aluminous mineral material, one can assume that the calcination of raw clay typically requires 2.3 GJ/t dry raw clay (at 800°C), therefore, for each ton of dry biomass fed to the reactor, one could activate about 5.8 tons of clay. The resulting product would consist of 0.25 tons of solid pyrolysis products, in particular biochar, and 5.8 tons of activated (calcined) clay.

Decreasing the weight ratio towards 3 increases the relative amount of biomass, and increases the percentage of solid pyrolysis products, in particular biochar, in the product. In this case the extra portion of gaseous pyrolysis product that is not needed for sustaining the calcination and pyrolysis steps, would be available for other purposes.

In a preferred embodiment of the invention, the gaseous pyrolysis product generated during the process comprises a non-condensable fraction and a condensable fraction. The non-condensable fraction and/or the condensable fraction can be effectively utilized as a fuel source. During pyrolysis, the volatile components of the biomass are majorly released in the form of vapor containing a condensable (bio-oil) and a non-condensable (pyrolysis gas) fraction and the remaining part of these volatiles along with the ashes stay in a solid form - biochar. Typical yields are 13-25 wt.% biochar, 50-70 wt.% bio-oil and 12-15 wt.% pyrolysis gas. The condensable fraction of the vapor produced consists of molecules such as carboxylic acids, alcohols, aldehydes, ketones, aromatic hydrocarbons, phenols, guaiacol and water. The non-condensable fraction mostly includes CO₂, CO, CH₄, H₂ and traces of light hydrocarbons.

Preferably, producing thermal energy from the gaseous pyrolysis product comprises combusting said at least partial amount of the gaseous pyrolysis product in a separate combustion chamber to obtain combustion gases and transferring thermal energy from the combustion gases to the calcination step and to the pyrolysis step. In the separate combustion chamber, both the condensable and the non-condensable fractions may be combusted. The condensable fraction may be condensed and fed to a burner of the combustion chamber in liquid form. Alternatively, the condensable fraction may be used in gaseous form.

By combusting the gaseous pyrolysis product in a separate combustion chamber, the invention enables the controlled and efficient generation of thermal energy. The combustion chamber provides a dedicated space for the complete oxidation of the pyrolysis gases, ensuring optimal combustion conditions and maximizing the release of heat energy.

The transfer of thermal energy from the combustion gases to the calcination and pyrolysis steps is achieved through appropriate heat exchange mechanisms. The hot combustion gases can be directed to flow along or around the reactor, allowing for heat transfer through the reactor walls. This direct contact between the combustion gases and the reactor surface facilitates the rapid and uniform distribution of heat, ensuring that the calcination and pyrolysis reactions receive the necessary thermal energy to proceed effectively.

Preferably, the combustion gases are led through an annular chamber that surrounds, and is in heat-exchanging contact with, the reactor. The use of an annular chamber surrounding the reactor further enhances the heat transfer efficiency. The flow of the combustion gases through the annular chamber also enables the preheating of the incoming mixture of silico-aluminous mineral material and biomass. As the cold mixture enters the reactor, it comes into contact with the hot reactor walls, which are continuously heated by the combustion gases flowing through the annular chamber. This preheating effect raises the temperature of the mixture before it reaches the main reaction zones.

Moreover, the use of the annular chamber allows for the implementation of a counter-current heat exchange configuration. In this arrangement, the combustion gases flow in the opposite direction to the movement of the mixture through the reactor. This counter-current flow maximizes the temperature gradient between the hot combustion gases and the relatively cooler mixture, enhancing the overall heat transfer efficiency. The counter-current configuration ensures that the hottest combustion gases interact with the mixture at the later stages of the process, where the highest temperatures are required for complete calcination and pyrolysis.

If separate reactors are used for the pyrolysis step and the calcination step, the calcination step may be conducted in a calciner that is designed to have an annular cross-section that surrounds the pyrolysis reactor and into which the off-gases from the combustion of the gaseous pyrolysis products are fed.

The temperature range for pyrolysis is usually 500-600°C. Therefore, a silico-aluminous mineral material is preferably chosen that is susceptible of pozzolanic reactivity upon calcination at a temperature of 500-600°C.

Preferably, a raw clay material is used as said silico-aluminous mineral material. The raw clay material may contain various clay minerals, such as kaolinite, smectite, illite, sepiolite, attapulgite, and vermiculite. Preferably, the raw clay material comprises kaolinite, since kaolinite is normally fully dehydroxylated at 550°C.

The suitable particle size for the raw clay material in the calcination process may be selected according to the circumstance of the individual process. A finer particle size is generally preferred as it provides a larger surface area for the heat and chemical reactions to occur, facilitating a more uniform and complete calcination. However, the particle size should not be excessively fine as it can lead to operational challenges like dusting or handling difficulties. The optimal particle size is typically determined through a balance between maximizing reactivity and practical considerations related to processing and handling in the specific calcination system being used. Preferably, the particle size of the raw clay material when being subjected to the calcination step is in the range of 50 micrometers to 1000 micrometers.

The silico-aluminous mineral material can also comprise or consist of slag, in particular non reactive slag, e.g. Electric Arc Furnace Oxidizing (EAFO) slag or Basic Oxygen Steelmaking (BOS) slag, concrete demolition waste, bottom ash, reclaimed ash, bauxite residues, oil shale, oil-well drill cuttings, coal gangue, or mixtures thereof.

Preferably, the silico-aluminous mineral material comprises a water content of 5-25 wt.-% of the total weight of the silico-aluminous mineral material. In case the silico-aluminous mineral material has a humidity above 25 wt.-%, waste heat from the combustion of the gaseous pyrolysis product can be used to reduce the amount of water in the material before the material is being introduced into the clinker cooler. Also, the water should preferably be above 5 wt.-% of the amount of the silico-aluminous mineral material to ensure that the occurrence of dust during the process is minimized.

Calcining the silico-aluminous mineral material in the pyrolyzer, simultaneously with pyrolyzing the biomass, advantageously results in that the pozzolanic material is obtained in combination with the solid pyrolysis product, in particular biochar. Therefore, a preferred embodiment of the invention provides that a combined material comprising the pozzolanic material and the solid pyrolysis product, in particular biochar, is discharged from a discharge end of the pyrolyzer.

The combined material may later be ground, with cement clinker and a source of calcium sulfate and other optional mineral components to form a composite Portland cement.

In a preferred embodiment, calcium carbonate may be added as an additional component to the composite cement in an amount of 1-30 wt.-% of the total weight of the composite cement.

According to a second aspect, the present invention provides a method of producing a composite cement containing cement clinker, a pozzolanic material and biochar, the method comprising:
- producing a pozzolanic material by a method according to the first aspect of the invention, wherein the pozzolanic material contains biochar,
- mixing the pozzolanic material with cement clinker,
- grinding the mixture in a cement mill optionally together with a source of calcium sulfates in order to obtain said composite cement.

Preferably, the composite cement comprises 50-90 wt.-% cement clinker, 5-40 wt.-% pozzolanic material and 1-5 wt.-% calcium sulfate.

Preferably, the composite cement further comprises calcium carbonate, preferably in an amount of 1-30 wt.-% of the total weight of the composite cement.

Preferably, the composite cement further comprises a supplementary cementitious material, such as a natural pozzolan, fly ash, granulated blast furnace slag and/or a silica-aluminous natural or artificial mineral having pozzolanic activity.

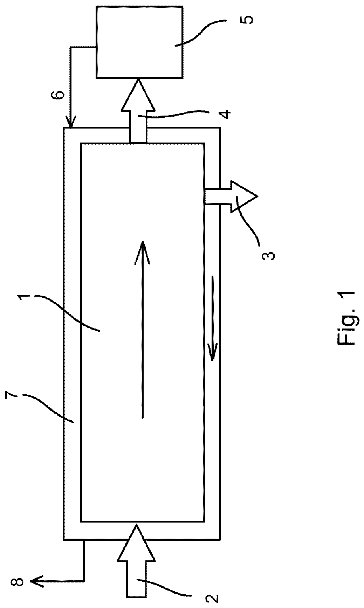

The invention will now be described in more detail with reference to an exemplary embodiment shown in Fig 1.

Fig. 1 shows a pyrolysis reactor 1, to which a mixture 2 of biomass and a raw silico-aluminous mineral material, such as raw clay, is fed. While being conveyed from an inlet to an outlet of the pyrolysis reactor 1 the mixture 2 is thermally treated under reducing conditions resulting in that the biomass is subjected to pyrolysis and the silico-aluminous mineral material is calcined. Calcination is carried out to obtain a pozzolanic material and pyrolysis is carried out to obtain a solid pyrolysis product, which is biochar, and a gaseous pyrolysis product, which comprises a condensable and non-condensable fraction. The pozzolanic material and the biochar are withdrawn from the pyrolysis reactor at 3 and the gaseous pyrolysis product is withdrawn at 4. The latter is introduced into a combustion chamber 5, in which the condensable and non-condensable fractions are combusted, in order to produce hot combustion gases 6 that are used to provide thermal energy to the pyrolysis reactor. This is achieved by guiding the combustion gases 6 through an annular chamber 7 or jacket surrounding the pyrolysis reactor 1. The combustion gases are withdrawn at 8 and fed to appropriate off-gas processing installations, such as a wet scrubber and/or a carbon filter. Further, the off-gases can be subjected to heat recuperation in order to withdraw thermal energy from the off-gas for being used in other processes.

## Claims

1. Method of producing a pozzolanic material, the method comprising:
- providing a silico-aluminous mineral material susceptible of pozzolanic reactivity upon calcination,
- subjecting the silico-aluminous mineral material to a thermal treatment at a temperature of 500-900°C, in order to obtain said pozzolanic material,
- subjecting biomass to a pyrolysis step to obtain a solid pyrolysis product and a gaseous pyrolysis product,
- using at least a partial amount of the gaseous pyrolysis product as a fuel for producing thermal energy and using the same as energy input for said thermal treatment step and for said pyrolysis step.

2. Method according to claim 1, wherein the pyrolysis step and the thermal treatment step are carried out in the same reactor (1).

3. Method according to claim 2, wherein the silico-aluminous mineral material and the biomass are mixed with each other, preferably prior to being introduced into the reactor (1), to obtain a mixture (2) and said mixture (2) is subjected to the thermal treatment and the pyrolysis step.

4. Method according to claim 3, wherein the mixture comprises a weight ratio of the biomass to the silico-aluminous mineral material, each based on the dry weight, of 1:4 to 1:1.

5. Method according to claim 3 or 4, wherein the mixture (2) is conveyed through the reactor (1) while being subjected to the thermal treatment and the pyrolysis step.

6. Method according to any one of claims 1 to 5, wherein the gaseous pyrolysis product comprises a non-condensable fraction and a condensable fraction and the non-condensable fraction and/or the condensable fraction is used as said fuel.

7. Method according to any one of claims 1 to 6, wherein producing thermal energy from the gaseous pyrolysis product comprises combusting said at least partial amount of the gaseous pyrolysis product in a combustion chamber (5) to obtain combustion gases and transferring thermal energy from the combustion gases to the thermal treatment step and to the pyrolysis step.

8. Method according to claim 7, wherein the combustion gases are led through an annular chamber (7) that surrounds, and is in heat-exchanging contact with, the reactor (1).

9. Method according to any one of claims 1 to 8, wherein the solid pyrolysis product comprises biochar that is mixed with the pozzolanic material and used as a mineral component of a composite cement.

10. Method according to claim 9, wherein carbon dioxide is contacted with said biochar.

11. Method according to any one of claims 1 to 10, wherein the thermal energy produced by combusting the gaseous pyrolysis product is used to dry the biomass and/or the silico-aluminous mineral material prior to the pyrolysis step.

12. Method according to any one of claims 1 to 11, wherein a raw clay material is used as said silico-aluminous mineral material.

13. Method according to any one of claims 1 to 12, wherein the silico-aluminous mineral material comprises a water content of 5-25 wt.-% of the total weight of the silico-aluminous mineral material.
